# EUROPEAN PATENT APPLICATION

(11) **EP 4 201 854 A1**
(43) Date of publication of application: **28.06.2023**
(21) Application number: 21217100.3
(22) Date of filing: 22.12.2021
(51) Int. Cl.: B65G 54/02, B65B 59/00

(54) **CONVEYING METHOD, UNIT AND APPARATUS PROVIDING FORMAT CHANGE FOR PACKAGING PLANTS**

(71) Applicant: Fameccanica.Data S.p.A., 66020 San Giovanni Teatino (CH) (IT)
(72) Inventor: CORAZZA, Federico, I-66020 San Giovanni Teatino (Chieti) (IT)
(74) Representative: Marchitelli, Mauro

(57) **Abstract**

Method, unit and apparatus for providing format change in a conveyor system for packaging plants.

## Description

### Field of the invention

In the field of automation dedicated to packaging, filling containers with liquids and/or assembling products on a line, automatic format change, i.e. the ability to quickly adapt the machine to different products, is of paramount importance. This can refer in particular to the technical solutions for handling and controlling the position and orientation of the processed objects/products, be it a package under construction, a container to be filled, or a product on which to carry out assembly operations. This control allows performing a large variety of workings in the space on the processed object, hereinafter referred to as *Item*, carried out through other devices whose position and orientation are known, typically by moving the Items between successive workstations. Operational flexibility in handling and control operations, i.e. the possibility of easily changing the type of Item (for example in terms of size and/or shape), or more simply format change, is a fundamental function in modern industrial automation solutions. This allows in fact to obtain small production batches, increasingly required for on-demand distribution models, and is a protection for the investment in the industrial automation asset.

This present discussion, and the invention described therein, are intended to refer mainly to industrial packaging applications.

### State of the prior art

In the known art there are many architectures to manage the position and orientation of the Items, some of which will be mentioned below.
a) The Items can be moved on conveyor belts, being secured by friction to the belt itself, and possibly oriented by guides. In this case, position and orientation of the Items are often measured using sensor solutions.
b) The Items can be moved by conveyor belts equipped with cleats, or elements secured to the belt and suitably shaped to couple to the Items either by shape, or by interference. The Items thus acquire the position and orientation dictated by the cleats. The relative positioning between the cleats is in this case predetermined along the extension of the conveyor belt.
c) In a more advanced form of the solution described in point b), it is possible to use two or more conveyor belts, parallel to each other but independent, equipped with cleats. The independence between the belts allows the cleats belonging to different belts to be appropriately spaced apart from one another, thus forming variable spaces, suitable for accommodating more than one type of Item, whose size in the direction of motion is compatible with the spaces created.
d) The Items can be fitted within passive transport elements, known in the Italian technique as *godets* for instance in the wine bottling field, in turn transported by a belt as in case a). The godets typically exhibit a regular external shape that allows easy orientation on the belt with the help of guides, and that allows easy measurement of their position via sensors. In this case, the Items are coupled by shape or by interference to the godets, and therefore their position and orientation are known.
e) Other solutions involve the use of a plurality of trolleys, bound by a guide to move along a precise trajectory and linked together in the manner of a catenary. Each trolley has a shape coupling that allows housing an Item thereon and to move it in a fixed fashion with the trolley itself.
f) The most recent solutions are based on the use of independent trolleys moved by a succession of linear motors along a guided path. Each single trolley can be moved independently of all the others, and each trolley can be coupled by shape or interference to an Item, thus guaranteeing position and orientation control. The solutions with independent trolleys differ in construction form, type of mechanical coupling of the trolley to the guide, position of the permanent magnets on the trolley itself. In this connection reference can be made to patent applications EP3650971A1 and WO9850760A2.

As regards the operational flexibility of the above solutions, the features adopted in the known art will be discussed herebelow.

In architectural solutions a) the format change consists solely of adjusting the guides in a direction perpendicular (TD) to that of the belt advancement, thus allowing only a variation in the section of the item being transported. Any change of shape or material can be managed by completely replacing the guides, respectively to provide a profile coupling or a surface more suitable for the changed friction conditions.

In type b) solutions, if a change of the longitudinal dimensions of the Item (MD) is required, it is necessary to reassemble the cleats at a pitch compatible with the new format, possibly modifying the number, or even replacing the belts if the cleats are monolithically welded to them. For a transversal format change (TD) it is also necessary in this case to adjust the guides, if the cleats are not shaped in such a way as to provide transversal containment (TD) to the Item. The change of shape almost inevitably involves the replacement of the cleats with others that are compatible in shape or, as already pointed out, of whole belts.

Compared to solutions b), solutions c) allow an easier change of MD format, within certain limits, but with this exception the considerations made for the architectures b) themselves remain valid.

The use of godets as described in d), typical for instance in the cosmetic industry, provides for the change of the godets themselves for any change of product type.

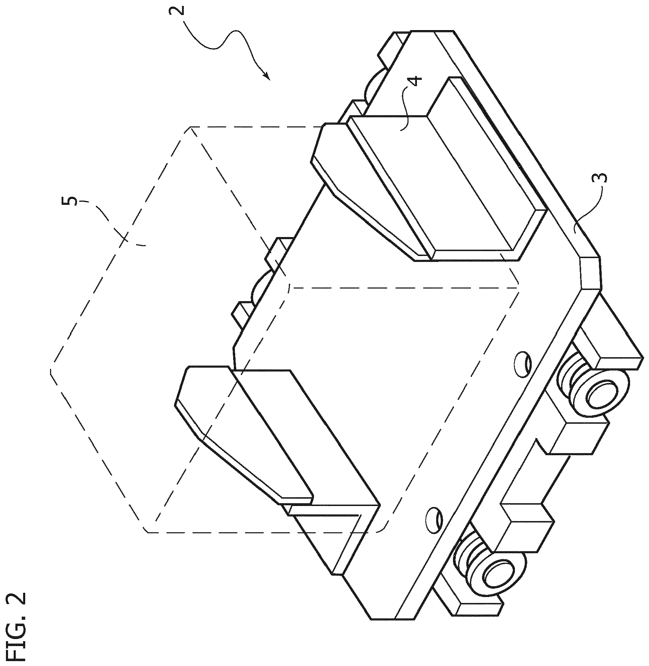

In solutions e) for the format change it is necessary to replace on the trolleys any apparatus suitable for coupling with the Item, or of the trolleys themselves in the event that the apparatus is built monolithically on the trolley itself such as shown in Fig. 2 of the annexed drawings.

Architectural solutions f) are of particular interest as regards flexibility issues: the format change therein is typically carried out by providing alternative paths for the independent trolleys. In addition to a main path, along which the Item transformation process is carried out, one or more secondary paths can be provided on which to divert the trolleys equipped for the current format, after emptying the Item, and from which retrieving trolleys already prepared for the different target format. This is the case for instance of Rockwell Automation's MagneMover^{®} LITE and B&R Gmbh's ACOPOStrack.

Other solutions with independent trolleys are not equipped with a proprietary path change system (in the technique: *diverter*), and for the format change they require the replacement of the trolleys, or of the devices that on the trolleys interface with the Items, compatibly with the format of destination. Examples: iTrack^{©} by Rockwell Automation, Beckhoff XTS.

### Problems of the known solution

In terms of operational flexibility, or more simply of format change, the solutions to the current state of the art suffer from three types of problems.

i. Time-consuming in terms of machine downtime for format change. This can be referred to architectures a), b), c), d), e), in cases of variation of MD, TD dimensions and of the shape of the Items. All the times in which the machine/ automation solution is stopped constitute a net economic loss for the operator of the same.

For a variation of the MD dimensions, for solution b) it is necessary either to replace the belts (if made with integrated cleats), with a great waste of workshop time to access them, or to change the position of the cleats, wasting a time proportional to the number of cleats themselves. In the case of solutions d) and e), a format change in MD involves the replacement of the godets or of the elements that are coupled to the Items on the trolleys.

The format variation in TD mainly impacts the architectures d) and e), for which each single transport element still needs to be replaced. In the architectures a), b), c) it is possible to mitigate the problem by providing a motorization that adjusts the width of the guides. In the case of solutions d) and e), a format change in MD involves the replacement of the godets or of the elements that are coupled to the Items on the trolleys.

The variation in the shape of the Item always involves long times for the format change. In architectures a), b) and c) this variation may make it necessary to mechanically replace the guides along the entire path of the Item. For architectures b) and c), it will be necessary to again intervene with the replacement of the conveyor belts or only the cleats, depending on the arrangement of the cleats as previously mentioned. For architectures e) and d), once again the only option is to replace the godets or elements that couple to the Items on the trolleys.

According to the inventor's knowledge, all the assembling and/or replacement operations mentioned above are currently performed manually, obviously with the machine being stopped.

The solution f) overcomes the limits of the previous ones, providing the possibility to foresee a parking path on which to house a series of independent trolleys already predisposed for the format change. This allows an automated change with relatively short times.

ii. Human error, assembly performed not in accordance with the technical requirements or wrong selection of mechanical parts.

For all format change cases described at item i, there is a risk that the mechanical components for the target machine configuration are confused during manual interventions, or that their assembling and adjustment be not performed in a workmanlike manner. The consequences of this risk, common to solutions a), b), c), d), e), include machine malfunction, the loss of quality in the finished product (i.e. in the process of the Item), up to the damage of the machine itself with the related downtime and repair times. Each of these consequences clearly has an economic impact.

Solution f) is also an improvement in this case, since it can be assumed that the trolleys set up for format change fully comply with the assembling and type specifications, and no human intervention is required for the format change.

iii. Solution footprint and need to integrate format change functions into the machine project.

This problem is highlighted with particular reference to solution f). This solution lends itself to the creation of a "parking" area or buffer for trolleys designed for format change, to be exchanged with those being currently used. This means that to provide for the format change function, the same technology adopted for the movement of the Items along the main process line will be used, constituting an integrated architecture.

The footprint of this function will add rigidly to the footprint associated with the main process.

The format change function can be considered as the most important of the optional functions of a machine, being in any case a support function for the main process, but not strictly necessary.

In the practice of the technique for architecture f) it is instead convenient to provide the format change function as a necessary part of the machine design, making it not optional. Any expansion of the machine that will include the format change, compatibly with the architecture f) is to be considered excessively onerous in operational and economic terms.

In summary:
- The increase in the footprint at the machine level involves logistical costs both for the direct costs of occupying the production space and for the indirect costs related to the impacts on the layout at the plant level.
- The footprint rigid increase limits the possibility of flexible production and logistics flows, subtracting available space.
- The independent trolley technology currently has very high costs. The use of this technology for an accessory function is economically inconvenient. For the previous reasonings, it would result in a strong impact on the basic cost of the machine.

### Summary of the invention

The present invention provides an automated format changeover solution, compatible with an Item handling architecture with trolleys or carts (architecture reference d), e), f)), characterized by having a buffer solution for said trolleys or carts not linked and independent from the main machine architecture.

The invention is set forth in claims 1 through 3 in connection with a change format process, in claims 4-6 in connection with a change format unit, and in claim 7 in connection with a change format apparatus.

The claims are part of the present disclosure.

For any format change, reference will be made to a *source* format, meaning the format in use when the change is to be made, and to a *target* format relating to the new format to replace the previous one.

Given a path for the movement of independent or passive trolleys, on which a machine process takes place for which a format change is required, the invention may provide the following functions:
1. A transfer device such as a manipulator that orderly takes the trolleys in use individually or in a finite number, in the current or source format, from said path, notes their position and orientation, and arranges them in an orderly manner on an accumulation device external to the path. The same manipulator will take individually or a finite number of trolleys already predisposed on the accumulation device, configured for the new or target format, and will orderly position them neatly on the path itself.
2. An accumulation or storage system, equipped with active or purely passive movements, designed to provide space for storing one or more types of trolleys, respectively configured for one or more types of formats.
3. A digital system for indexing the trolleys, to check the order of picking and storage.
4. A digital system for guiding the manipulator to pick up the trolleys referred to the two reference systems, i.e the machine and the storage system.

### Brief description of the drawings

The invention will now be disclosed in detail with reference to the annexed drawing, purely provided by way of non-limiting example, in which:

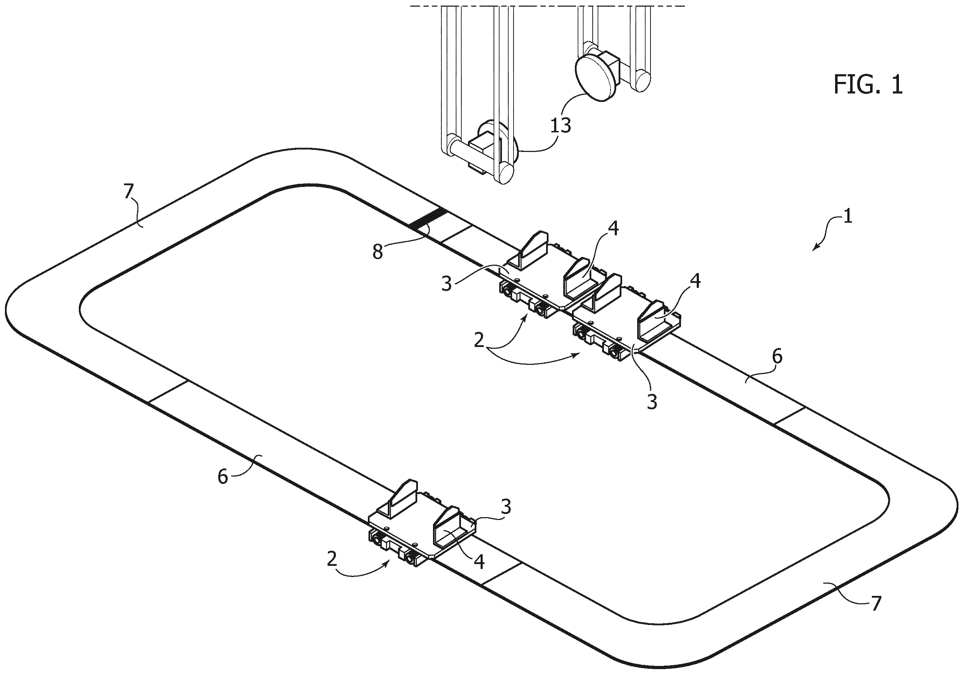

- Figure 1 is a diagrammatic perspective and simplified view of a main generally known conveying device to which the invention can be applied,
- Figure 2 is an enlarged detail of Fig. 1,
- Figure 3 is a diagrammatic perspective and simplified view of the group formed by the main conveying device of Figure 1, an accumulation device or secondary conveyor device, and a transfer device, and
- Figures 4-1) through 4-12) diagrammatically show an example of how the transfer device operates together with the main conveying device and the secondary conveyor device.

### Detailed description of the invention

Reference is made here to a constructive solution of the functions set forth above, considered as a purpose for a project in progress at the date of lodging the present application, expressly related to changing format for box products or a semi-finished box products for packaging.

For the handling solution according to the invention a main conveying device 1 (motorized transport system or first guide) with independent linear motor trolleys 2 is considered, that develops on a closed path with an approximately rectangular shape. As shown in Figure 2 each trolley comprises in a way known per se a wheeled support plate 3 bearing cleats or housings 4 for items 5, namely boxes, of a quadrangular source format. For the sake of simplicity only a few trolleys 2 are shown in the figures. As illustrated in detail two opposite sides 6 of the main conveying device 1 carry batteries for the for active and independent control of the linear motors of the trolleys 2. The other two sides 7 of the main conveying device 1 are made up of belt conveyor systems, which connect in a continuous way to the sides 6. Each belt conveyor is equipped with a motorized actuation, whereby the whole main conveying device 1 participates in the same movement. The format change function is considered being localized on one of the sides 6. The trolleys 2 will stop, individually or in finite numbers, at a fixed reference line 8.

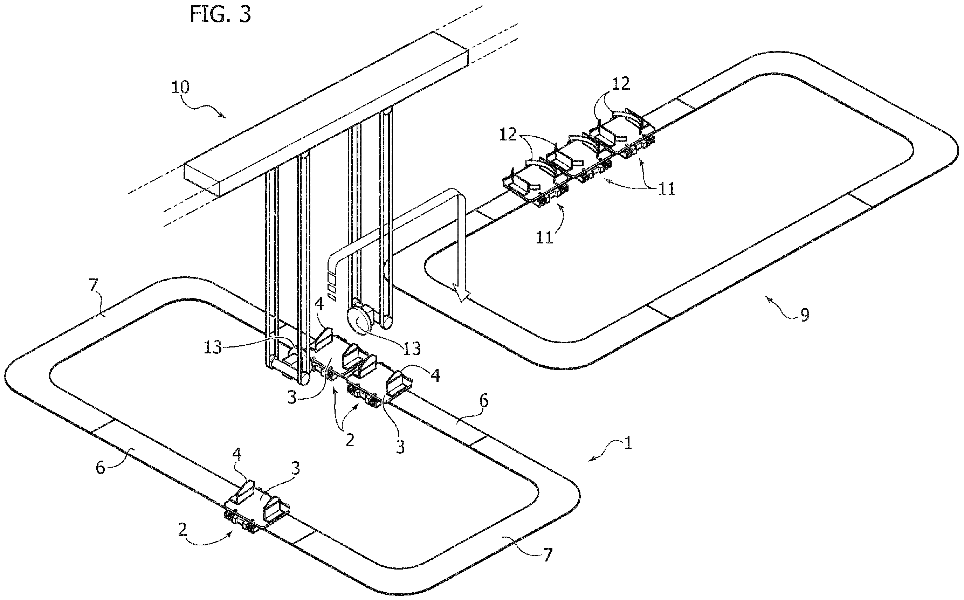

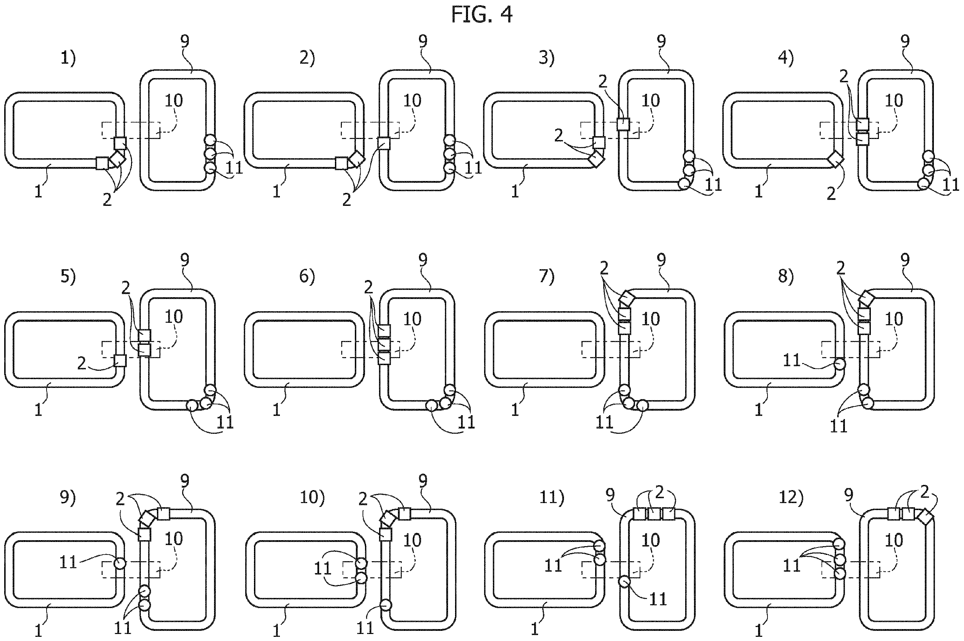

A secondary conveyor device 9 (accumulation or storage system, or second guide), also consisting of a closed path motorized belt and separated and independent with respect to the main conveying device 1, provides an accumulation or storage space for trolleys 11 set up for the target format, namely having cleats or housings 12 for boxes having a round target format. Also for the sake of simplicity only a few trolleys 11 are shown in Figures 3 and 4. The main conveying device 1 is distinct, physically separate and facing the second conveyor device 9 guide at the coupling section 6.

Each trolley 2, 11 is provided with a first magnetic element configured to magnetically couple to one of the main conveying device or guide 1 and the secondary conveyor device or guide 9 and a second magnetic element, opposite to the first magnetic element, configured to magnetically couple to another of said guides 1, 9. These magnetic elements are not shown in the drawings since known from WO2021/053456: the first magnetic element and the second magnetic elements are selectively activable so that each trolley 2, 11 can be coupled to a respective one of the main conveying device 1 and the secondary conveyor device 9.

A transfer device 10, separated and independent from the main conveying device 1 and the secondary conveyor device 9, is designed to grasp one or more trolley 2 at the fixed reference line 8 by means of its end-effector or gripping elements 13 and transfer them onto the secondary conveyor device 9. The transfer device 10 may consist, as in the illustrated example, of a cartesian motorized manipulator having at least two degrees of freedom (horizontal X and vertical Z movements). As an alternative the transfer device may comprise a transport unit designed to jointly pick up and transfer a finite number of trolleys 2,11 such as the transport unit disclosed in WO2021/053456.

After each pick up, the conveyor belt 7 advances as many trolleys as those which have been picked up, offering them to the manipulator 10 at the reference line 8. The newly deposited trolleys 2 are moved forward by the secondary conveyor device 9 in order to create space for the subsequent picking up and depositing by the manipulator 10, until the main conveying device 1 is emptied of all the trolleys 2 configured in the original or source format. The secondary conveyor device 9 itself also carries an equal number of trolleys 11. Thanks to the previous movements of the secondary conveyor device 9, these will be located in the vicinity of the cartesian manipulator, which at this point will begin the transfer operation of the trolleys 11 of the target format onto the main conveying device 1.

It is to be pointed out that the trolleys 2 and 11 are provided with linear motorization and are indexed in a known fashion, and the manipulator 10 is digitally controlled in relation to at least two reference systems of the main conveying device 1 and of secondary conveyor device 9, respectively.

In more detail, operation of the conveying apparatus of the invention is as follows, with reference to Figure 4:
1) the main conveying device 1 brings the first trolley 2 with the source format 5 to the reference line 8,
2) the manipulator 10 picks up the first trolley 2 and transfer it to the secondary conveyor device 9,
3) the main conveying device 1 advances the next trolley 2 until it reaches the reference line 8. At the same time, the secondary conveyor device 9 advances of a space corresponding to a trolley,
4) the manipulator 10 takes the carriage currently at the reference line 8 and transfers it to the secondary conveyor device 9,
5)-7): steps 3) and 4) are repeated until all the trolleys 2 are placed on the secondary conveyor device 9,
8) the manipulator 10 takes the first trolley 11 with the target format and transfers it onto the main conveying device 1,
9) the main conveying device 1 advances the space of a trolley 11. The secondary conveyor device 9 advances the space of one trolley 11 or as much as necessary to bring the next trolley 11 into a position to be picked up,
10) the manipulator 10 takes the trolley 11 and transfers it to the main conveying device 1, 11)-12): steps 9) and 10) are repeated until all trolleys 11 are placed on the main conveying device 1.

### Advantages of the invention over the prior art

The invention provides a solution to the problem of automated format change in the context of items handling.

The solution according to the invention was conceived in combination with the use of independent trolleys, since it is believed that, as described in the state of the art section, this technology overcomes the limits of more traditional solutions.

The present invention, compared to the state of the art of independent trolley solutions, provides the following advantages:
- Much cheaper solution. Instead of providing sections of batteries of linear motors to exchange the trolleys between the two main process and accumulation zones, the present invention makes use of simpler and cheaper technologies such as belts and cartesian manipulators.
- Greater ease of maintenance interventions. Typically, the intervention on a battery of linear motors in an architecture with independent trolleys requires the mechanical separation of the adjacent sections, with a great waste of time.

- Greater reliability. The architecture as presented uses few motors and mechanical solutions of proven reliability.
- Independence of the storage architecture with respect to the path linked to the main process. This in turn provides an easier addition of the automated format change to a machine born without it.

Also in connection with the variants of the invention which shall be disclosed hereafter the following advantages are highlighted as compared to the format changeover with independent trolleys known in the state of the art:
- flexibility in the use of the footprint/reduction of the apparatus footprint. This advantage refers to the use of storage solutions carried by AGVs or in any case by mobile vehicles. The accumulation footprint is released once the format change has taken place.
- integration of the solution in the logistics of the plant and flexibility of the target format. If the storage solution is brought by an AGV, the same can find at the warehouse different types of trolleys with different target formats.

### Variants and additional details of the invention

As far as the storage/secondary conveyor device is concerned:
1. Solutions based on motorized accumulation belt:
   1.1. Belt with closed path, single or reversible direction of motion
   1.2. Open belt with reversible direction of motion
2. Accumulation consisting of an active section of linear motors with independent trolleys
3. Static solutions. A degree of freedom is added to the manipulator to replace the movement of the accumulation belt.
   3.1. Accumulation plane or table. The trolleys in the source format are neatly deposited to fill the area of a static table. A separate area contains the trolleys in the target format.
   3.2. Accumulation shelf. The trolleys in the source format are neatly deposited to fill the shelves of a static shelf. A separate area of the shelf contains the trolleys in the target format.
4. Passive vehicle solutions. Solutions 1, 2, 3 can be mounted on board a vehicle to be supplied to the format change area as needed.
5. Solutions with AGV. An AGV can carry storage solutions 1,2,3. For example, if the AGV carries an accumulation table as in 3.1, the same can be delivered to a warehouse area, where a manipulator loads the target trolleys in an area of the table. The AGV will then position itself in the format change area, where the manipulator previously described will bring the trolleys of the source format onto the table and transfer the target trolleys to the conveying apparatus.

As far as the manipulator is concerned:
1. The manipulator can be single or multiple, in the latter case picking up the trolleys at multiple reference points.
2. The manipulator can have more than two degrees of freedom. Additional degrees of freedom in translation can allow the manipulator to follow the trolleys, picking them up at the reference line at a non-zero speed. Rotational degrees of freedom can allow the manipulator to orient the trolley on the accumulation area differently, how it is more convenient.
3. The manipulator can be of any type that is convenient for the application, for example Cartesian, Scara, anthropomorphic, parallel.
4. The end-effector or gripping element can take and move a number of trolleys greater than or equal to 1.

As far as the served movement solution is concerned: The present invention is compatible with all architectures d), e), f) mentioned in the state of the art section.

## Claims

1. A method for providing format change in a conveyor system for packaging plants, in which said system comprises a first guide (1) on which there are a plurality of first mobile trolleys (2) on said first guide (1) and each provided with first housing means (4) configured to house a first type in terms of size and/or shape of at least a box product or a semi-finished box product for packaging, and a second guide (9) on which there are a plurality of second mobile trolleys (11) on said second guide (9) and each provided with second housing means (12) configured to house a second type in terms of size and/or shape of at least a box product or a semi-finished box product for packaging, in which said first housing means (4) are different from said second housing means (12) for housing, respectively, said first type or said second type of box product or a semi-finished box product for packaging, in which the first guide (1) is distinct, physically separate and facing the second guide (9) at a coupling section (6), wherein the method comprises a phase in which all the first trolleys (2) pass from the first guide (1) to the second guide (9) and all the second trolleys (11) pass from the second guide (9) to the first guide (1) in said coupling section (6).

2. Method according to claim 1, **characterized in that** each of said first and second trolleys (2, 11) is provided with a first magnetic element configured to magnetically couple to one of said first and second guides (1, 9), and a second magnetic element, opposite to said first magnetic element, configured to magnetically couple to the other of said first and second guides (1, 9), wherein said first magnetic element and said second magnetic element are selectively activable so that said first and second trolleys (2, 11) are coupled to one of said first and second guides (1, 9).

3. Method according to claim 1 or 2, **characterized in that** said first and second trolleys (2, 11) are handled by a transfer device (10) individually or in groups.

4. A conveying unit for providing format change in a conveyor system for packaging plants, in which said system comprises a first guide (1) on which there are a plurality of first mobile trolleys (2) on said first guide (1) and each provided with first housing means (4) configured to house a first type in terms of size and/or shape of at least a box product or a semi-finished box product for packaging, and a second guide (9) on which there are a plurality of second mobile trolleys (11) on said second guide (9) and each provided with second housing means (12) configured to house a second type in terms of size and/or shape of at least a box product or a semi-finished box product for packaging, in which said first housing means (4) are different from said second housing means (12) for housing, respectively, said irst type or said second type of box product or a semi-finished box product for packaging, in which the first guide (1) is distinct, physically separate and facing the second guide (9) at a coupling section (6), wherein the conveying unit is configured to carry out a phase in which all the first trolleys (2) pass from the first guide (1) to the second guide (9) and all the second trolleys (11) pass from the second guide (9) to the first guide (1) in said coupling section (6).

5. Conveying unit according to claim 4, wherein each of said first and second trolleys (2, 11) is provided with a first magnetic element configured to magnetically couple to one of said first and second guides (1, 9), and a second magnetic element, opposite to said first magnetic element, configured to magnetically couple to the other of said first and second guides (1, 9), wherein said first magnetic element and said second magnetic element are selectively activable so that said first and second trolleys (2, 11) are coupled to one of said first and second guides (1, 9).

6. Conveying unit according to claim 4 or 5, comprising a transfer device (10) configured to handle said first and second trolleys (2, 11) individually or in groups.

7. Conveying apparatus for providing format change in a conveyor system for packaging plants, comprising one or more conveying units as claimed in any one of claims 4 to 6.
